# EUROPEAN PATENT APPLICATION

(11) **EP 4 328 805 A1**
(43) Date of publication of application: **28.02.2024**
(21) Application number: 22871055.4
(22) Date of filing: 22.06.2022
(51) Int. Cl.: G06N 3/0985, G06N 3/082, G06N 3/0895

(54) **METHOD AND APPARATUS FOR GENERATING TARGET DEEP LEARNING MODEL**

(71) Applicant: Jina AI GmbH, 10243 Berlin (DE); Jinai AI (Beijing) Co., Ltd., Beijing 100080 (CN)
(72) Inventor: XIAO, Han, 10243 Berlin (DE); WANG, Nan, Beijing 100080 (CN); WANG, Bo, 10243 Berlin (DE); MAXIMILIAN, Werk, 10243 Berlin (DE); GEORGIOS, Mastrapas, 10243 Berlin (DE)
(74) Representative: Bayramoglu et al.
(86) International application number: PCT/CN2022/100582
(87) International publication number: WO 2023/245522

(57) **Abstract**

The present disclosure provides a method and an apparatus for generating a target deep learning model. In the method, an instruction and original data for generating the target deep learning model is obtained from a user. The instruction includes a task expected to be performed by the target deep learning model. Then, training data is generated from the original data. A first deep learning model corresponding to the task is determined. Then, the first deep learning model is trained with the training data to obtain the target deep learning model.

## Description

### TECHNICAL FIELD

The embodiments of the present disclosure relate to the field of computer technology, in particular to a method and an apparatus for generating a target deep learning model.

### BACKGROUND

A deep learning model is a machine learning model, which aims to establish and simulate the neural network of human brain for analysis and learning, and simulate the mechanism of human brain to interpret data, such as text, image, sound, etc. Deep learning models can be widely used in various fields, performing various tasks, such as computer vision, language understanding, speech recognition, advertising recommendation, neural search, etc.

In the initial stage of the development of deep learning technology, developers of each deep learning model need to write a lot of repeated code. In order to improve work efficiency, these developers converted their code into a deep learning framework and released it to the network to share with other developers. Different deep learning frameworks have emerged on the network in succession. The current popular deep learning frameworks include PaddlePaddle, Tensorflow, Caffe, Theano, MXNet, Torch, PyTorch, etc. With the development of deep learning technology, some developers will release pre-trained deep learning models to the network. When other developers need to fulfill tasks, they can use task data to fine tune the pre-trained deep learning model so as to obtain the desired deep learning model. In the process of fine-tuning, developers need to process task data according to the actual situation so as to build training data sets, and need to select loss functions and optimize models according to personal experience.

### BRIEF DESCRIPTION

The embodiments described herein provide a method, an apparatus, an electronic device and a computer-readable storage medium for generating a target deep learning model.

According to a first aspect of the present disclosure, a method for generating a target deep learning model is provided. In the method, an instruction and original data for generating the target deep learning model is obtained from a user. The instruction includes a task expected to be performed by the target deep learning model. Next, training data is generated from the original data. A first deep learning model corresponding to the task is determined. Then, the first deep learning model is trained with the training data to obtain the target deep learning model.

In some embodiments of the present disclosure, in the step of determining the first deep learning model corresponding to the task, a plurality of candidate deep learning models corresponding to the task are determined. Then, the plurality of candidate deep learning models are trained with a part of the training data. Next, a candidate deep learning model that performs the task best among the plurality of trained candidate deep learning models is determined. Then, the candidate deep learning model that performs the task best is determined as the first deep learning model.

In some embodiments of the present disclosure, total numbers of layers of the plurality of candidate deep learning models are different.

In some embodiments of the present disclosure, layer numbers of output layers of the plurality of candidate deep learning models are different.

In some embodiments of the present disclosure, training parameters for training the plurality of candidate deep learning models are at least partially different.

In some embodiments of the present disclosure, the instruction further includes one or more of the following: a model type of the first deep learning model; a total number of layers of the first deep learning model; a layer number of an output layer of the first deep learning model; and training parameters for training the first deep learning model.

In some embodiments of the present disclosure, the training parameters include one or more of the following: a learning rate; and a training stop condition.

In some embodiments of the present disclosure, the method further includes determining a loss function and an optimizer corresponding to the first deep learning model. The determined loss function and optimizer are used to train the first deep learning model.

In some embodiments of the present disclosure, the method further includes displaying a value of a loss function of the first deep learning model in each round in a process of training the first deep learning model.

In some embodiments of the present disclosure, in the step of training the first deep learning model with the training data to obtain the target deep learning model, a training history of the first deep learning model is recorded in a process of training the first deep learning model. The training history includes model parameters of the first deep learning model obtained after each round of training. If the user's selection of a number of training rounds of the first deep learning model is received, the first deep learning model trained for the number of training rounds is generated according to the recorded model parameters corresponding to the number of training rounds. Then, the generated first deep learning model is determined as the target deep learning model.

In some embodiments of the present disclosure, the instruction further includes a target format of the target deep learning model. The method further includes converting the format of the first deep learning model into the target format.

In some embodiments of the present disclosure, in the step of converting the format of the first deep learning model into the target format, the first deep learning model is converted to a first deep learning model in ONNX format. Then the first deep learning model in ONNX format is converted to a first deep learning model in the target format.

In some embodiments of the present disclosure, the task includes search task. The target deep learning model includes a deep learning model for neural search.

In some embodiments of the present disclosure, the search task includes one of the following: searching for pictures with texts, searching for texts with texts, searching for pictures with pictures, searching for texts with pictures, and searching for sounds with sounds.

In some embodiments of the present disclosure, in the step of generating training data from the original data, a type of the original data is determined. The type of original data includes categorical data with label, session data with label, and data without label. The label of the categorical data indicates a category of the categorical data. The label of the session data indicates a question-answer relevance of the session data. Then, the training data is generated according to the type of the original data.

According to a second aspect of the present disclosure, an apparatus for generating a target deep learning model is provided. The apparatus includes: an obtaining module for obtaining from a user an instruction and original data for generating the target deep learning model, wherein the instruction includes a task expected to be performed by the target deep learning model; a training data generation module for generating training data from the original data; a model determining module for determining a first deep learning model corresponding to the task; and a training module for training the first deep learning model with the training data to obtain the target deep learning model.

According to a third aspect of the present disclosure, an electronic device is provided. The electronic device includes: at least one processor; and at least one memory storing a computer program. Wherein the computer program is executable by the at least one processor, whereby the electronic device is configured to obtain from a user an instruction and original data for generating the target deep learning model, wherein the instruction includes a task expected to be performed by the target deep learning model, generate training data from the original data, determine a first deep learning model corresponding to the task, and train the first deep learning model with the training data to obtain the target deep learning model.

In some embodiments of the present disclosure, the computer program is executable by the at least one processor, whereby the electronic device is configured to determine the first deep learning model corresponding to the task by the following operations: determining a plurality of candidate deep learning models corresponding to the task; training the plurality of candidate deep learning models with a part of the training data; determining a candidate deep learning model that performs the task best among the plurality of trained candidate deep learning models; and determining the candidate deep learning model that performs the task best as the first deep learning model.

In some embodiments of the present disclosure, the computer program is executable by the at least one processor, whereby the electronic device is further configured to determine a loss function and an optimizer corresponding to the first deep learning model. The determined loss function and optimizer are used to train the first deep learning model.

In some embodiments of the present disclosure, the computer program is executable by the at least one processor, whereby the electronic device is further configured to display a value of a loss function of the first deep learning model in each round in a process of training the first deep learning model.

In some embodiments of the present disclosure, the computer program is executable by the at least one processor, whereby the electronic device is configured to train the first deep learning model with the training data to obtain the target deep learning model by the following operations: recording a training history of the first deep learning model in a process of training the first deep learning model, wherein the training history includes model parameters of the first deep learning model obtained after each round of training; generating, in response to receiving the user's selection of a number of training rounds of the first deep learning model, the first deep learning model trained for the number of training rounds according to the recorded model parameters corresponding to the number of training rounds; and determining the generated first deep learning model as the target deep learning model.

In some embodiments of the present disclosure, the instruction further includes a target format of the target deep learning model. Wherein the computer program is executable by the at least one processor, whereby the electronic device is further configured to convert the format of the first deep learning model into the target format.

In some embodiments of the present disclosure, the computer program is executable by the at least one processor, whereby the electronic device is configured to convert the format of the first deep learning model into the target format by the following operations: convert the first deep learning model to a first deep learning model in ONNX format, and then convert the first deep learning model in ONNX format to the first deep learning model in the target format.

In some embodiments of the present disclosure, the computer program is executable by the at least one processor, whereby the electronic device is configured to generate training data from the original data by the following operations: determining a type of the original data, wherein the type of the original data includes categorical data with label, session data with label, and data without label, a label of the categorical data indicates a category of the categorical data, and a label of the session data indicates a question-answer relevance of the session data; and generating the training data according to the type of the original data.

According to a fourth aspect of the present disclosure, a computer-readable storage medium is provided, in which a computer program is stored. When the computer program is executed by a processor, the steps of the method according to the first aspect of the present disclosure are performed.

### BRIEF DESCRIPTION OF THE DRAWINGS

To describe technical solutions of the embodiments of the present disclosure more clearly, the accompanying drawings of the embodiments will be briefly introduced in the following. It should be known that the accompanying drawings in the following description merely involve with some embodiments of the present disclosure, but not limit the present disclosure, in which:
FIG. 1 is an exemplary flow chart of a method for generating a target deep learning model according to an embodiment of the present disclosure;
FIG. 2 is an exemplary flowchart of a step of generating training data from original data in the embodiment as shown in FIG. 1;
FIG. 3 is an exemplary flowchart of a step of generating training data according to a type of original data in the embodiment as shown in FIG. 2;
FIG. 4 is an exemplary flowchart of a step of determining a first deep learning model corresponding to a task in the embodiment as shown in FIG. 1;
FIG. 5 is a schematic block diagram of an apparatus for generating a target deep learning model according to an embodiment of the present disclosure;
FIG. 6 is a schematic block diagram of an electronic device that performs the method for generating a target deep learning model according to an embodiment of the present disclosure.

It should be noted that the elements in the drawings are schematic and not drawn to scale.

### DETAILED DESCRIPTION

To make objectives, technical solutions and advantages of the embodiments of the present disclosure clearer, the technical solutions in the embodiments of the present disclosure will be described clearly and completely below, in conjunction with the accompanying drawings in the embodiments of the present disclosure. Obviously, the described embodiments are merely some but not all of the embodiments of the present disclosure. All other embodiments obtained by those skilled in the art based on the described embodiments of the present disclosure without creative efforts shall fall within the protecting scope of the present disclosure.

Unless otherwise defined, all terms (including technical and scientific terms) used herein have the same meaning as commonly understood by those skilled in the art to which present disclosure belongs. It will be further understood that terms, such as those defined in commonly used dictionaries, should be interpreted as having a meaning that is consistent with their meaning in the context of the specification and will not be interpreted in an idealized or overly formal sense unless expressly so defined herein. Terms such as "first" and "second" are only used to distinguish one component (or part of a component) from another component (or another part of a component).

As mentioned above, developers of the deep learning model may obtain the target deep learning model by fine-tuning the pre-trained deep learning model. In a process of fine-tuning the deep learning model, training data preparation, model selection and training parameters selection are required. This requires developers to have a great amount of knowledge about the deep learning model, which is not friendly to junior developers. This not only requires the junior developers to pay a lot of effort, but also delays the development progress.

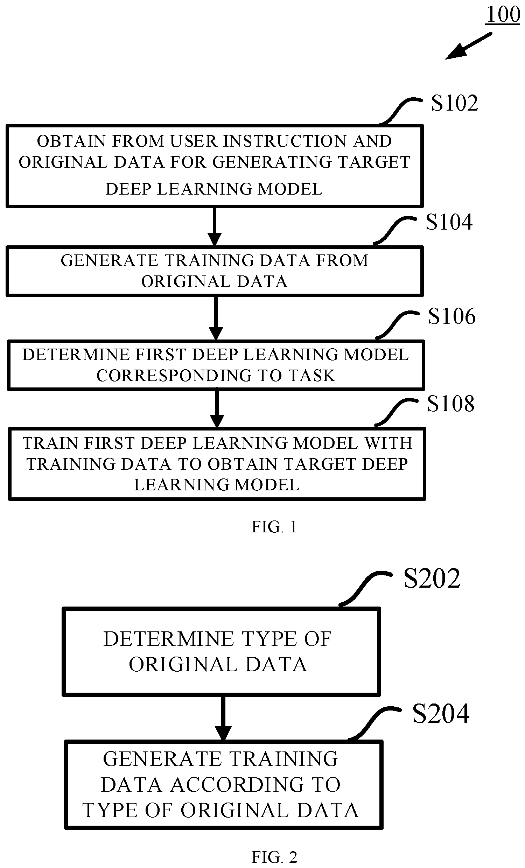

The embodiments of the present disclosure propose a method for generating a target deep learning model. FIG. 1 shows an exemplary flow chart of a method for generating a target deep learning model according to an embodiment of the present disclosure.

In the method 100, at block S102, an instruction and original data for generating the target deep learning model is obtained from a user. The instruction includes a task expected to be performed by the target deep learning model. In some embodiments of the present disclosure, the task can be a search task, such as, searching for pictures with texts, searching for texts with texts, searching for pictures with pictures, searching for texts with pictures, searching for sounds with sounds, etc. In an example, the instruction inputted by the user may include an expectation to obtain a deep learning model capable of performing a specified search task. The original data inputted by the user is associated with the task included in the instruction. In the case that the search task is searching for pictures with pictures, the user may input a picture set as the original data used for generating the target deep learning model. In the case that the search task is searching for sounds with sounds, the user may input an audio set as the original data used for generating the target deep learning model.

At block S104, training data is generated from the original data. The following will continue to take the task being a search task as an example. FIG. 2 shows an exemplary flowchart of the step of generating the training data from the original data. At block S202 of FIG. 2, a type of the original data is determined. The type of the original data may include categorical data with label, session data with label, and data without label. A label of the categorical data indicates a category of the categorical data. A label of the session data indicates a question-answer relevance of the session data. In some embodiments of the present disclosure, the original data may include a label indication field. The label indication field indicates the label of the original data. The type of the original data may be determined by the label indication field.

In some embodiments of the present disclosure, there may be more than one label for the categorical data. The category of the categorical data may be determined based on some or all labels of the categorical data. Take a picture as an example to illustrate how the labels of the categorical data indicate the category of the categorical data. Suppose the labels of the categorical data include "cat", "dog", "cute", and "ugly". Then the pictures can be classified into cat pictures and dog pictures based on some labels "cat" and "dog". Alternatively, the pictures can be classified into lovely cat pictures, ugly cat pictures, lovely dog pictures, and ugly dog pictures based on all the labels "cat", "dog", "cute", and "ugly". No matter how many labels there are for the categorical data, each label is a unary label. A unary label indicates that the label is related to only one piece of data.

In some embodiments of the present disclosure, session data is, for example, historical interaction data between an e-commerce platform and a user. In an example, the user may search for a keyword (equivalent to "question") of a certain product in the e-commerce platform. Based on that keyword, the e-commerce platform may push several product links (equivalent to "answer") to the user. If the user clicks a product link, the label of the session data consisted of the keyword and the product link is set as "relevant" (for example, it is represented by number 1). If the user does not click the product link, the label of the session data consisted of the keyword and the product link is set as "irrelevant" (for example, it is represented by number 0). The label of the session data is related to both question and answer, so it is a binary label. Such session data may, for example, come from search logs saved by the e-commerce platform for each user.

In some embodiments of the present disclosure, data without label refers to data whose label indication field is empty. In the example of e-commerce platform, data without label is, for example, product photos uploaded by users. Such product photos are not labeled, so they are defined as data without label or unlabeled data.

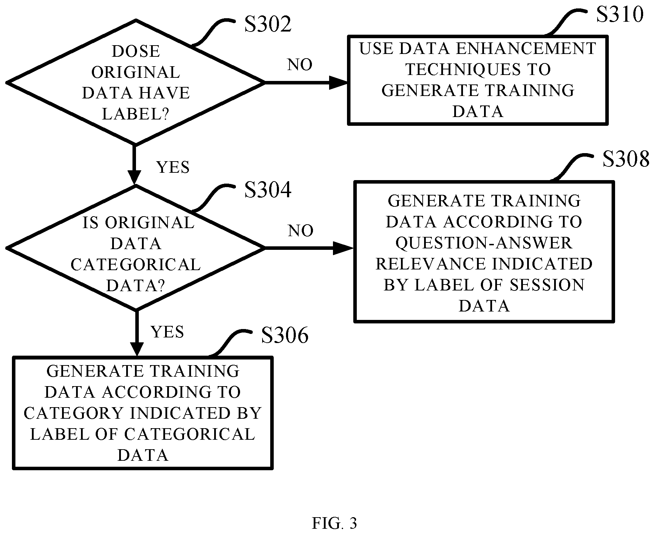

At block S204, training data is generated according to the type of the original data. FIG. 3 shows an exemplary flowchart of the step of generating training data according to the type of the original data. At block S302 of FIG. 3, it is determined whether the original data has a label. In some embodiments of the present disclosure, whether the original data has a label may be determined by whether the label indication field in the original data is empty. If the original data has a label ("Yes" at block S302), the process goes to block S304 to determine whether the original data is categorical data.

In some embodiments of the present disclosure, whether the original data is the categorical data can be determined by whether the label of the original data is a unary label or a binary label. If the label is a unary label, it is determined that the original data is the categorical data. If the label is a binary tag, it is determined that the original data is the session data.

In some other embodiments of the present disclosure, whether the original data is the categorical data may be determined by whether the label indication field of the original data includes text. If the label indication field includes text, it is determined that the original data is the categorical data. If the label indication field includes only number 0 or 1, it is determined that the original data is the session data. The above text may include words in Chinese, English, or other languages, or their combinations.

If the original data is the categorical data ("Yes" at block S304), the training data is generated according to the category indicated by the label of the categorical data, at block S306. In some embodiments of the present disclosure, some or all of the categorical data may be selected as reference samples, for example. For each of the reference samples, the categorical data in the same category as the reference sample may be determined as a positive sample associated with the reference sample, and the categorical data in a category different from the reference sample may be determined as a negative sample associated with the reference sample. The reference sample, the positive sample associated with the reference sample, and the negative sample associated with the reference sample are grouped into a group of training data. In this way, a corresponding group of training data is generated for each of the reference samples.

If the original data is not the categorical data ("No" at block S304), the training data is generated according to the question-answer relevance indicated by the label of the session data, at block S308. In some embodiments of the present disclosure, each piece of session data includes a reference sample and a plurality of matching samples. In the above example of e-commerce platform, the reference sample may be the keyword the user used to search for a product in the e-commerce platform, and the plurality of matching samples may be several product links pushed by the e-commerce platform to the user. Each matching sample has a label to indicate whether the matching sample is related to the reference sample. For each piece of session data, for example, the matching samples labeled "relevant" or 1 (the label indicates positive question-answer relevance) may be used as positive samples, and the matching samples labeled "irrelevant" or 0 (the label indicates negative question-answer relevance) may be used as negative samples. The reference samples, the positive samples and the negative samples are grouped into a group of training data. In this way, a corresponding group of training data is generated for each piece of session data.

If the original data does not have a label ("No" at block S302), data enhancement techniques are used to generate training data, at block S310. In some embodiments of the present disclosure, each piece of original data may be used as a reference sample. The data enhancement techniques may then be used to generate a plurality of positive samples from the reference sample and a plurality of negative samples from the original data other than the reference sample. In the process of data enhancement, the data enhancement approach to be adopted may be determined by the task obtained at block S 102 of FIG. 1.

In the example where the task is a search task of searching for pictures with pictures, one or more of the operations of flipping, mirroring, cropping, etc. may be performed on the picture being the reference sample to generate a plurality of positive samples. One or more of the operations of flipping, mirroring, cropping, etc. may be performed on the picture in the original data other than the reference sample to generate a plurality of negative samples.

In the example where the task is searching for texts with texts or searching for sounds with sounds, a random mask operation may be performed on the text or sound segment being the reference sample to generate a plurality of positive samples. The random mask operation may be performed on the text or sound segment in the original data other than the reference sample to generate a plurality of negative samples.

When performing the random mask operation on the text, any one or more words in the text may be masked or removed randomly. In other words, the number and position of words masked or removed in the text may be random. In an example, a random mask operation on "I like Beijing very much" may result in "I like Beijing [unknown] ", where "very much" is masked and marked as "[unknown]". In an alternative example, the random mask operation on "I like Beijing very much" may result in "I like Beijing", where "very much" is removed. In another alternative example, the random mask operation on "I like Beijing very much" may result in "[Unknown] like Beijing [Unknown]", where "I" and "very much" is masked and marked as "[Unknown]".

When performing the random mask operation on a sound segment, a sound clip of any length in the sound segment may be randomly masked or removed. In other words, the length and position of the sound clip that is masked or removed in the sound segment are random.

The operation at block S 104 can automatically generate training data without the user's participation, thereby reducing the user's workload and improving work efficiency.

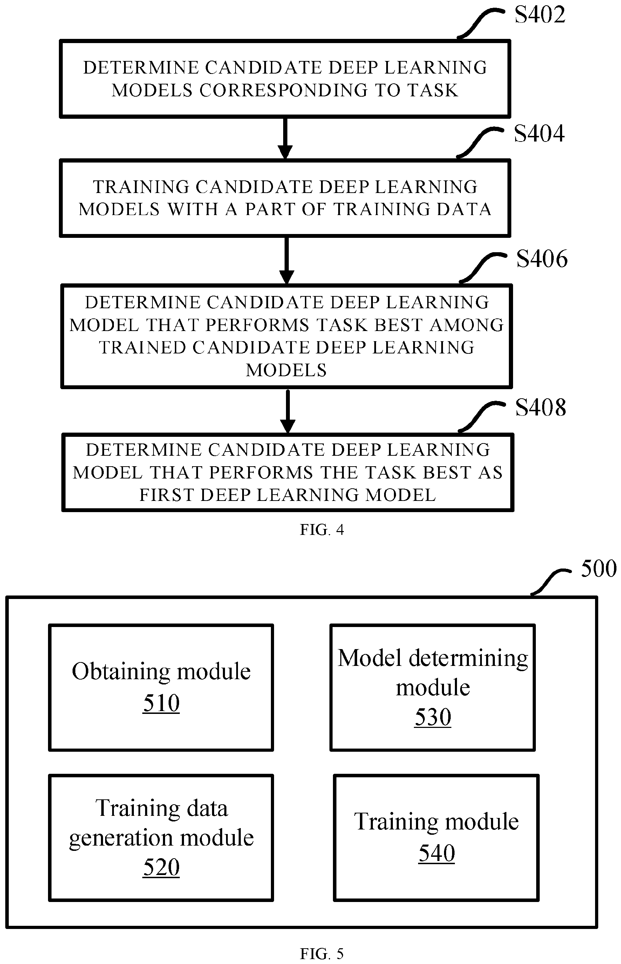

Back to FIG. 1, at block S106, a first deep learning model corresponding to the task is determined. In some embodiments of the present disclosure, the operation at block S106 may be performed concurrently with the operation at block S104. In some other embodiments of the present disclosure, the operation at block S 106 may be performed prior to the operation at block S104. FIG. 4 shows an exemplary flowchart of the step of determining the first deep learning model corresponding to the task.

At block S402 of FIG. 4, a plurality of candidate deep learning models corresponding to the task are determined. In some embodiments of the present disclosure, a first mapping table between a plurality of pre-trained deep learning models and a plurality of tasks that can be performed by the plurality of deep learning models may be established in advance. The plurality of pre-trained deep learning models may be existing pre-trained deep learning models or pre-trained deep learning models which may be developed in the future. The first mapping table may be established based on experience. In an example, a plurality of deep learning models may be able to perform the same task. In other words, one task may be performed by any one of the plurality of deep learning models. Therefore, a plurality of candidate deep learning models corresponding to the task may be determined based on the first mapping table.

In some embodiments of the present disclosure, an adjustment may be performed on a plurality of pre-trained deep learning models in advance, and the adjusted deep learning model may be added to the first mapping table. In this way, after receiving the instruction including the task, the adjusted deep learning model may be used as the candidate deep learning model corresponding to the task. The adjustment may include, for example, adding several layers of fully connected neurons as outputs on the last output layer of the pre-trained deep learning model; and/or changing the layer number of the output layer of the pre-trained deep learning model (for example, output from the penultimate layer instead of the last layer).

In some embodiments of the present disclosure, the plurality of pre-trained deep learning models may include large models and small models. The total number of layers of the large model is higher than that of the small model. In some embodiments of the present disclosure, different training parameters may be set for the plurality of candidate deep learning models. Training parameters may include one or more of the following: learning rate, training stop conditions, etc.

At block S404, a part of the training data is used to train the plurality of candidate deep learning models. The purpose of using a part of the training data here is to reduce the amount of calculation. The training of the plurality of candidate deep learning models with a part of the training data can be considered as test training. In some embodiments of the present disclosure, the number of training rounds N executed by the test training can be set. N is a positive integer. After performing N rounds of training on each of the plurality of candidate deep learning models using a part of the training data respectively, the test training process of the plurality of candidate deep learning models is completed.

At block S406, the candidate deep learning model that performs the task best among the plurality of trained candidate deep learning models is determined. In some embodiments of the present disclosure, the candidate deep learning model whose loss function has the lowest value can be determined as the candidate deep learning model that performs the task best. In some other embodiments of the present disclosure, data other than the part of the training data used at block S404 may be determined as verification data. Then the verification data is used to verify the performance of the plurality of trained candidate deep learning models. When the performance is search accuracy, the candidate deep learning model with the highest search accuracy may be determined as the candidate deep learning model that performs the task best.

At block S408, the candidate deep learning model that performs the task best is determined as the first deep learning model. In this way, after the operations of blocks S402 to S406, the first deep learning model can be the deep learning model most suitable for performing the tasks specified by the user.

Back to FIG. 1, at block S108, the first deep learning model is trained with the training data to obtain the target deep learning model. In some embodiments of the present disclosure, a loss function and an optimizer corresponding to the first deep learning model may be determined. The determined loss function and optimizer may be used to train the first deep learning model. In some embodiments of the present disclosure, a second mapping table between a plurality of pre-trained deep learning models and the loss function and the optimizer corresponding to the plurality of pre-trained deep learning models may be established in advance. The second mapping table may be established based on experience. After the first deep learning model is determined, the loss function and the optimizer corresponding to the first deep learning model may be determined based on the second mapping table.

In some embodiments of the present disclosure, the value of the loss function of the first deep learning model in each round may be displayed during the process of training the first deep learning model. The value of the loss function in each round may be plotted into a curve for the user to observe.

In some embodiments of the present disclosure, the training history of the first deep learning model may be recorded during the process of training the first deep learning model. The training history includes the model parameters of the first deep learning model obtained after each round of training. This allows the user to backtrack the model training history. The user can select the number of training rounds to train the first deep learning model based on the observed value of the loss function. If the user's selection of the number of training rounds of the first deep learning model is received, the first deep learning model trained for the number of training rounds may be generated according to the recorded model parameters corresponding to the number of training rounds. Then, the generated first deep learning model may be determined as the target deep learning model.

Through the above operations, the user does not need to know the specific structure of each deep learning model. The user only needs to input the instruction including the task to be performed and the original data used for generating the target deep learning model, and then the desired target deep learning model can be obtained. Therefore, the method for generating the target deep learning model according to the embodiments of the present disclosure is very user friendly, which can reduce the user's workload and accelerate the development progress.

Further, in some embodiments of the present disclosure, the user is further allowed to specify the model type, model parameters and training parameters of the target deep learning model. In this way, experienced developers of deep learning model are able to choose the deep learning model to be used and set one or more parameters about the target deep learning model by themselves, so as to develop the target deep learning model more flexibly. In this case, the instruction obtained at block S 102 may further include one or more of the following: the model type of the first deep learning model, the total number of layers of the first deep learning model, the layer number of the output layer of the first deep learning model, and the training parameters for training the first deep learning model. In the above way, the senior developers of the deep learning model can work flexibly by using the method for generating the target deep learning model according to the embodiments of the present disclosure.

In addition, the pre-trained deep learning models may have different deep learning frameworks (formats). Junior developers often learn about how to build a deep learning model by starting from learning a single deep learning framework. If the pre-trained model that junior developers want to use is written with a deep learning framework that they are not good at, they need to be familiar with the deep learning framework, and then fine-tuning the deep learning model.

In view of the above situation, some embodiments of the present disclosure propose to make the generated deep learning model have the format expected by the user (which is alternatively referred to as the target format in the context). In some embodiments of the present disclosure, the indication obtained at block S 102 of FIG. 1 may include the target format of the target deep learning model. The computational graph and model parameters of the first deep learning model determined at block S 106 may be converted respectively to the computational graph and model parameters of the ONNX model in a universal format, such that the format of the first deep learning model is converted to ONNX. After the format of the first deep learning model is converted to ONNX, the first deep learning model in the ONNX format is converted to the first deep learning model in the target format. In this case, the first deep learning model trained at block S 108 of FIG. 1 is the first deep learning model in the target format. After training the first deep learning model in the target format, the target deep learning model in the target format may be obtained.

FIG. 5 shows a schematic block diagram of an apparatus 500 for generating a target deep learning model according to an embodiment of the present disclosure. The apparatus 500 includes an obtaining module 510, a training data generation module 520, a model determination module 530, and a training module 540. The obtaining module 510 is used for obtaining from a user an instruction and original data for generating the target deep learning model. The instruction includes a task expected to be performed by the target deep learning model. The training data generation module 520 is used for generating training data from the original data. The model determination module 530 is used for determining a first deep learning model corresponding to the task. The training module 540 is used for training the first deep learning model with the training data to obtain the target deep learning model.

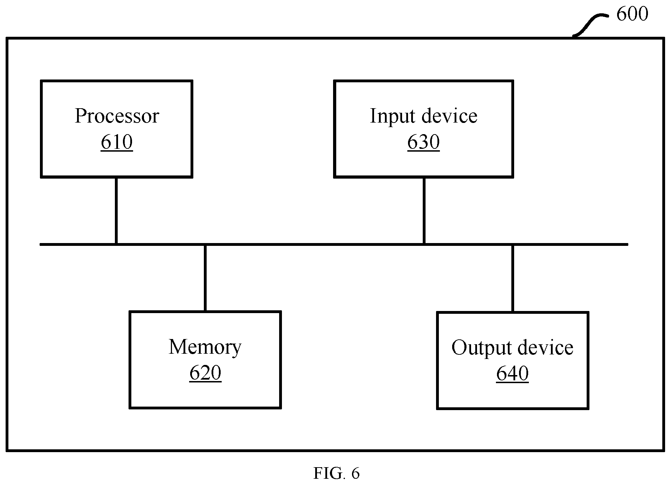

FIG. 6 shows a schematic block diagram of an electronic device 600 that performs a method for generating a target deep learning model according to an embodiment of the present disclosure. As shown in FIG. 6, the electronic device 600 may include a processor 610 and a memory 620 storing a computer program. When the computer program is executed by the processor 610, the electronic device 600 may perform the steps of the method 100 as shown in FIG. 1. In an example, the electronic device 600 may be a computer device or a cloud computing node. The electronic device 600 may be used as a platform for providing deep learning model training services. The electronic device 600 may obtain from a user an instruction and original data for generating the target deep learning model. The instruction includes a task expected to be performed by the target deep learning model. The electronic device 600 may then generate training data from the original data. The electronic device 600 may determine a first deep learning model corresponding to the task. Then, the electronic device 600 may train the first deep learning model with the training data to obtain the target deep learning model.

In some embodiments of the present disclosure, the electronic device 600 may determine a plurality of candidate deep learning models corresponding to the task. Then, the electronic device 600 may train the plurality of candidate deep learning models with a part of the training data. Next, the electronic device 600 may determine a candidate deep learning model that performs the task best among the plurality of trained candidate deep learning models.

In some embodiments of the present disclosure, the electronic device 600 may determine a loss function and an optimizer corresponding to the first deep learning model. The determined loss function and optimizer are used to train the first deep learning model.

In some embodiments of the present disclosure, the electronic device 600 may display a value of a loss function of the first deep learning model in each round in a process of training the first deep learning model.

In some embodiments of the present disclosure, the electronic device 600 may record a training history of the first deep learning model in a process of training the first deep learning model. The training history includes model parameters of the first deep learning model obtained after each round of training. If the user's selection of a number of training rounds of the first deep learning model is received, the electronic device 600 may generate the first deep learning model trained for the number of training rounds according to the recorded model parameters corresponding to the number of training rounds. Then, the electronic device 600 may determine the generated first deep learning model as the target deep learning model.

In some embodiments of the present disclosure, the instruction further includes a target format of the target deep learning model. The electronic device 600 may convert the format of the first deep learning model into the target format.

In some embodiments of the present disclosure, the electronic device 600 may determine a type of the original data. The type of the original data includes categorical data with label, session data with label, and data without label. A label of the categorical data indicates a category of the categorical data. A label of the session data indicates a question-answer relevance of the session data. The electronic device 600 may generate the training data according to the type of the original data.

In the embodiment of the present disclosure, the processor 610 may be, for example, a central processing unit (CPU), a microprocessor, a digital signal processor (DSP), a processor based on a multi-core processor architecture, and so on. The memory 620 may be a memory of any type that is implemented by using a text storage technology, including but not limited to a random access memory, a read-only memory, a semiconductor-based memory, a flash memory, a magnetic disk memory, and so on.

Furthermore, in some embodiments of the present disclosure, the electronic device 600 may further include an input device 630, such as a keyboard or a mouse to obtain from a user an instruction and original data for generating a target deep learning model. In addition, the electronic device 600 may further include an output device 640, such as a display to output the results and processes of training the deep learning model.

From the above, the method and apparatus for generating the target deep learning model according to the embodiments of the present disclosure can generate the target deep learning model according to the instruction including the task to be performed and the original data for generating the target deep learning model which is inputted by the user. In this way, the user is able to obtain the desired target deep learning model without knowing the specific structure of the deep learning model, which reduces the user's workload and improves the work efficiency. Further, the method and apparatus for generating the target deep learning model according to the embodiments of the present disclosure further allows the user to specify the model parameters, training parameters and/or format of the target deep learning model, such that the user can obtain a customized target deep learning model.

The flowchart and block diagrams in the Figures illustrate the architecture, functionality, and operation of possible implementations of apparatuses and methods according to various embodiments of the present invention. In this regard, each block in the flowchart or block diagrams may represent a module, segment, or portion of instructions, which comprises one or more executable instructions for implementing the specified logical function(s). In some alternative implementations, the functions noted in the blocks may occur out of the order noted in the Figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

As used herein and in the appended claims, the singular form of a word includes the plural, and vice versa, unless the context clearly dictates otherwise. Thus, singular words are generally inclusive of the plurals of the respective terms. Similarly, the words "include" and "comprise" are to be interpreted as inclusively rather than exclusively. Likewise, the terms "include" and "or" should be construed to be inclusive, unless such an interpretation is clearly prohibited from the context. Where used herein the term "examples," particularly when followed by a listing of terms is merely exemplary and illustrative, and should not be deemed to be exclusive or comprehensive.

Further adaptive aspects and scopes become apparent from the description provided herein. It should be understood that various aspects of the present disclosure may be implemented separately or in combination with one or more other aspects. It should also be understood that the description and specific embodiments in the present disclosure are intended to describe rather than limit the scope of the present disclosure.

A plurality of embodiments of the present disclosure has been described in detail above. However, apparently those skilled in the art may make various modifications and variations on the embodiments of the present disclosure without departing from the spirit and scope of the present disclosure. The scope of protecting of the present disclosure is limited by the appended claims.

## Claims

1. A method for generating a target deep learning model, the method comprising:
obtaining, from a user, an instruction and original data for generating the target deep learning model, wherein the instruction comprises a task expected to be performed by the target deep learning model;
generating training data from the original data;
determining a first deep learning model corresponding to the task; and
training the first deep learning model with the training data to obtain the target deep learning model.

2. The method according to claim 1, wherein determining the first deep learning model corresponding to the task comprises:
determining a plurality of candidate deep learning models corresponding to the task;
training the plurality of candidate deep learning models with a part of the training data;
determining a candidate deep learning model that performs the task best among the plurality of trained candidate deep learning models; and
determining the candidate deep learning model that performs the task best as the first deep learning model.

3. The method according to claim 2, wherein total numbers of layers of the plurality of candidate deep learning models are different; and/or
layer numbers of output layers of the plurality of candidate deep learning models are different; and/or
training parameters for training the plurality of candidate deep learning models are at least partially different.

4. The method according to claim 1, wherein the instruction further comprises one or more of the following:
a model type of the first deep learning model;
a total number of layers of the first deep learning model;
a layer number of an output layer of the first deep learning model; and
training parameters for training the first deep learning model.

5. The method according to claim 3 or 4, wherein the training parameters comprise one or more of the following:
a learning rate; and
a training stop condition.

6. The method according to any one of claims 1 to 4, the method further comprising: determining a loss function and an optimizer corresponding to the first deep learning model,
wherein the determined loss function and optimizer are used to train the first deep learning model.

7. The method according to any one of claims 1 to 4, the method further comprising:
displaying a value of a loss function of the first deep learning model in each round in a process of training the first deep learning model.

8. The method according to any one of claims 1 to 4, wherein training the first deep learning model with the training data to obtain the target deep learning model comprises:
recording a training history of the first deep learning model in a process of training the first deep learning model, wherein the training history comprises model parameters of the first deep learning model obtained after each round of training;
generating, in response to receiving the user's selection of a number of training rounds of the first deep learning model, the first deep learning model trained for the number of training rounds according to the recorded model parameters corresponding to the number of training rounds; and
determining the generated first deep learning model as the target deep learning model.

9. The method according to any one of claims 1 to 4, wherein the instruction further comprises a target format of the target deep learning model, and the method further comprises:
converting the format of the first deep learning model into the target format.

10. The method according to any one of claims 1 to 4, wherein the task comprises a search task, and the target deep learning model comprises a deep learning model for neural search.

11. The method according to claim 10, wherein the search task comprises one of the following:
searching for pictures with texts;
searching for texts with texts;
searching for pictures with pictures;
searching for texts with pictures; and
searching for sounds with sounds.

12. The method according to claim 10, wherein generating training data from the original data according to the task comprises:
determining a type of the original data, wherein the type of the original data comprises categorical data with label, session data with label, and data without label, a label of the categorical data indicates a category of the categorical data, and a label of the session data indicates a question-answer relevance of the session data; and
generating the training data according to the type of the original data.

13. An apparatus for generating a target deep learning model comprising:
an obtaining module for obtaining from a user an instruction and original data for generating the target deep learning model, wherein the instruction comprises a task expected to be performed by the target deep learning model;
a training data generation module for generating training data from the original data;
a model determining module for determining a first deep learning model corresponding to the task; and
a training module for training the first deep learning model with the training data to obtain the target deep learning model.

14. An electronic device comprising:
at least one processor; and
at least one memory storing a computer program;
wherein the computer program is executable by the at least one processor, whereby the electronic device is configured to perform the steps of the method according to any one of claims 1 to 12.

15. A computer-readable storage medium storing a computer program, wherein when the computer program is executed by a processor, the steps of the method according to any one of claims 1 to 12 are performed.
